# EUROPEAN PATENT SPECIFICATION

(11) **EP 4 270 014 B1**
(45) Date of publication and mention of the grant of the patent: **04.11.2026**
(21) Application number: 21909853.0
(22) Date of filing: 28.09.2021
(51) Int. Cl.: G01N 35/10

(54) **AUTOMATIC ANALYSIS DEVICE AND POSITION ADJUSTMENT METHOD**
AUTOMATISCHE ANALYSEVORRICHTUNG UND POSITIONSEINSTELLUNGSVERFAHREN
DISPOSITIF D'ANALYSE AUTOMATIQUE ET PROCÉDÉ DE RÉGLAGE DE POSITION

(30) Priority: 24.12.2020 JP 2020214595
(43) Date of publication of application: 01.11.2023
(73) Proprietor: HITACHI HIGH-TECH CORPORATION, Tokyo 105-6409 (JP)
(72) Inventor: FUKUSHI Yudai, Tokyo 105-6409 (JP)
(74) Representative: Strehl & Partner mbB
(86) International application number: PCT/JP2021/035667
(87) International publication number: WO 2022/137695

(56) References cited:
- WO-A1-2012/111366
- WO-A1-2012/157642
- JP-A- 2007 285 957
- JP-A- 2015 087 329
- JP-A- 2016 061 617
- JP-A- 2021 139 825
- JP-A- H11 160 327
- US-A- 5 314 825
- US-A1- 2013 345 894
- US-A1- 2013 345 894
- US-A1- 2015 114 140

## Description

### Technical Field

The present disclosure relates to an automatic analyzer, and a position adjustment method.

### Background Art

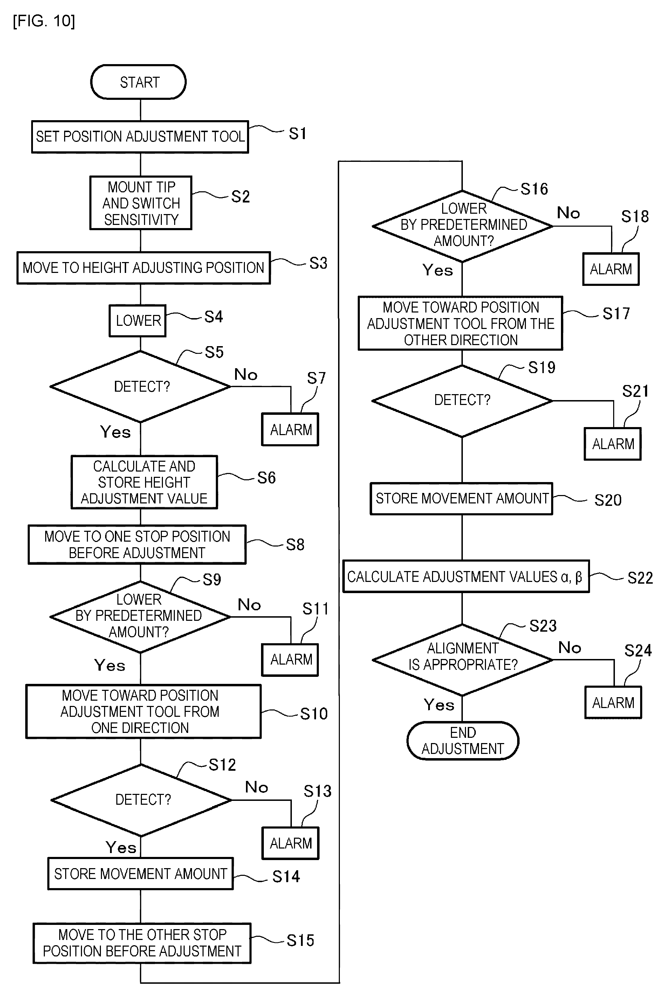

An automatic analyzer used for chemical analysis using a biochemical analyzer, an immune analyzer, or the like in a clinical examination includes a dispensing mechanism including a nozzle that dispenses a sample and a reagent. The nozzle is preferably adjusted to stop at a center with respect to each stop position. Here, PTL 1 describes a technique of detecting a sloped surface of a tool by repeatedly moving a dispensing probe downward (paragraphs 0088 to 0105, FIG. 10).

Further related automatic analyzers are disclosed in the documents US 5 314 825 A, US 2015/114140 A1 and US 2013/345894 A1, wherein the document US 5 314 825 A discloses an automatic analyzer according to the preamble of claim 1.

### Citation List

### Patent Literature

PTL 1: JP2007-285957A

### Summary of Invention

### Technical Problem

According to PTL 1, there is a problem that positioning takes time. An object of the present disclosure is to provide an automatic analyzer, a position adjustment tool, and a position adjustment method by which positioning can be performed in a short time.

### Solution to Problem

The above object is achieved by an automatic analyzer according to claim 1 and by a position adjustment method according to claim 8.

### Advantageous Effects of Invention

According to the present disclosure, it is possible to provide an automatic analyzer, a position adjustment tool, and a position adjustment method by which positioning can be performed in a short time.

### Brief Description of Drawings

[FIG. 1] FIG. 1 is a top view of an automatic analyzer.
[FIG. 2] FIG. 2 is a diagram illustrating dispensing of a sample and a reagent by a nozzle.
[FIG. 3A] FIG. 3A is a diagram illustrating alignment of the nozzle in a radial direction (a diagram showing a state before the alignment).
[FIG. 3B] FIG. 3B is a perspective view of a position adjustment tool.
[FIG. 3C] FIG. 3C is a diagram illustrating the alignment of the nozzle in the radial direction (a diagram showing a state after the alignment).
[FIG. 4A] FIG. 4A is a top view of a position adjustment tool according to another embodiment.
[FIG. 4B] FIG. 4B is a side view of the position adjustment tool according to the other embodiment.
[FIG. 5] FIG. 5 is a view showing a state in which the nozzle is brought into contact with an upper end surface of the position adjustment tool.
[FIG. 6A] FIG. 6A is a top view at the time of alignment in a circumferential direction from one direction.
[FIG. 6B] FIG. 6B is a side view at the time of the alignment in the circumferential direction from one direction.
[FIG. 7A] FIG. 7A is a top view at the time of alignment in the circumferential direction from the other direction.
[FIG. 7B] FIG. 7B is a side diagram at the time of the alignment in the circumferential direction from the other direction.
[FIG. 8] FIG. 8 is a diagram illustrating a relationship between a height position of the nozzle having a shape of which an outer diameter changes in a height direction and a distance between the nozzle and a center of the position adjustment tool.
[FIG. 9A] FIG. 9A is a top view illustrating a case in which alignment is correct and a case in which alignment is incorrect (a diagram showing a state in which contact is made from one direction).
[FIG. 9B] FIG. 9B is a top view illustrating a case in which alignment is correct and a case in which alignment is incorrect (a view showing a state in which the contact is made from the other direction).
[FIG. 10] FIG. 10 is a flowchart showing an automatic adjustment method.

### Description of Embodiments

Hereinafter, an embodiment for implementing the disclosure (referred to as an embodiment) will be described with reference to the drawings. In the following description of one embodiment, another embodiment applicable to one embodiment will also be appropriately described. In addition, the same members are denoted by the same reference numerals, and redundant description will be omitted. Furthermore, those having the same function are denoted by the same name. The illustrated contents are merely schematic, and for convenience of illustration, the illustrated configuration may be changed from the actual configuration or illustration of some members may be omitted or modified between the drawings within a range in which the effect of the disclosure is not significantly impaired.

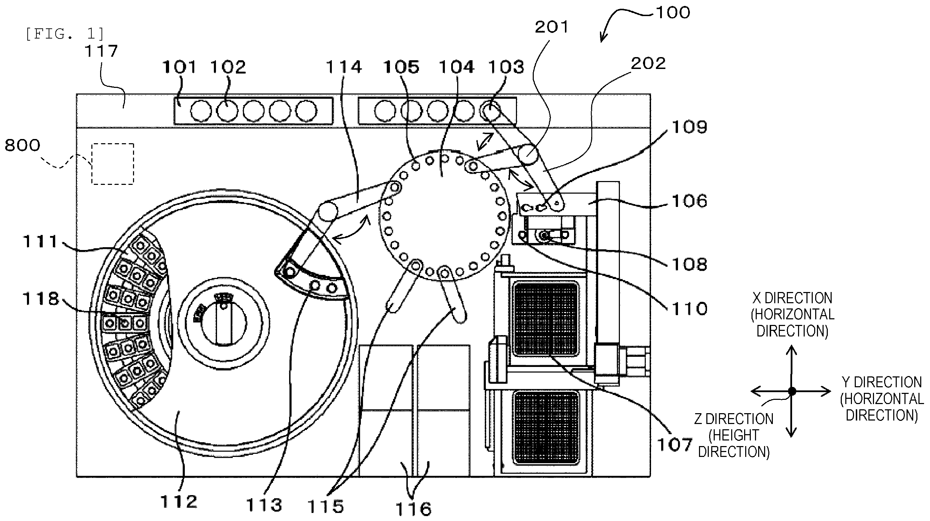

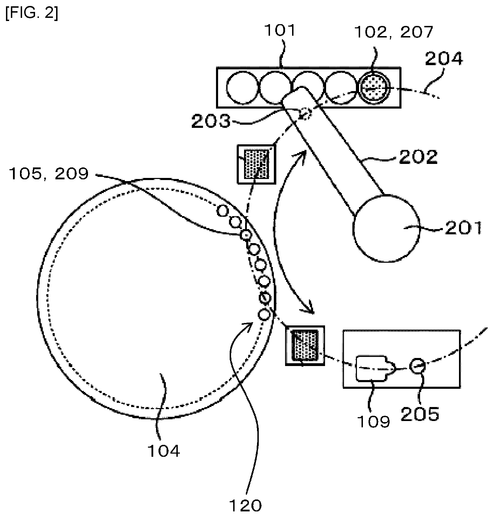

FIG. 1 is a top view of an automatic analyzer 100. Sample containers 102 for holding a sample are provided on a transport rack 101 of the automatic analyzer 100, and each of the sample containers 102 is moved to a dispensing position near a nozzle 203 (FIG. 2) by a rack transport line 117. As will be described in detail later, the nozzle 203 performs at least one of aspiration of a reaction liquid (an example of a fluid) in reaction containers 105 (an example of a container) and discharge of a sample and a reagent (an example of the fluid) into the reaction containers 105.

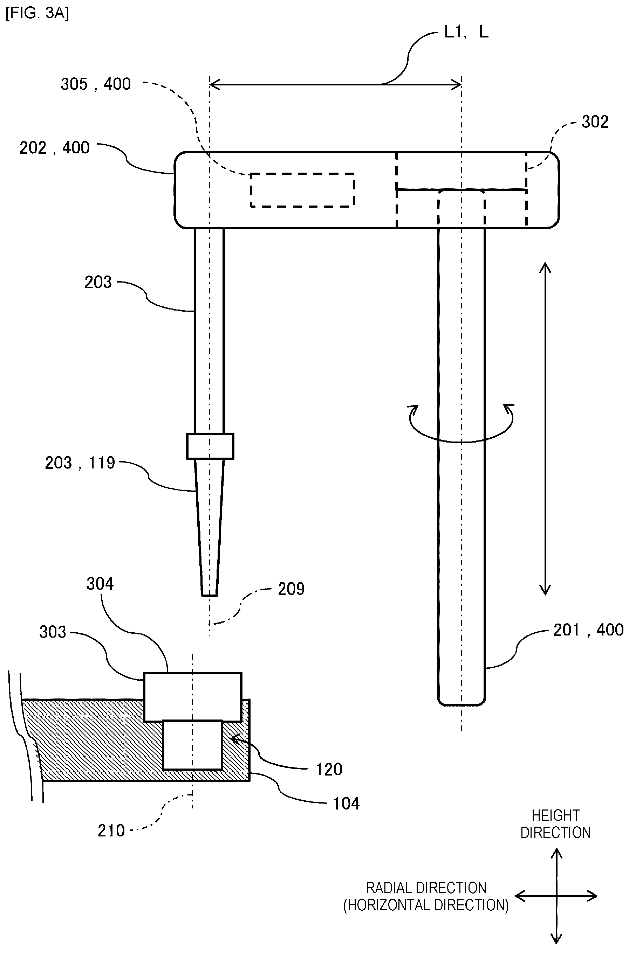

A plurality of reaction containers 105 can be set in an incubator (reaction disk) 104, and the incubator 104 can rotate in a horizontal plane to move each of the reaction containers 105 set in a circumferential direction to a predetermined position. A transport mechanism 106 is movable in three directions that are an X-axis direction, a Y-axis direction, and a Z-axis direction. The transport mechanism 106 moves in a range of predetermined places of a holding member 107, a stirring mechanism 108, a disposal hole 109, a mounting position 110 of a tip 119 (FIG. 3A), and the incubator 104, and transports the tip 119 and the reaction container 105.

A plurality of unused reaction containers 105 and tips 119 (FIG. 3A) are set on the holding member 107. The transport mechanism 106 moves to a position above the holding member 107, is lowered to grip the unused reaction container 105, then moves upward, moves to a position above a predetermined position of the incubator 104, and is lowered to set the reaction container 105. Next, the transport mechanism 106 moves to a position above the holding member 107, is lowered to grip the unused tip 119, then moves upward, moves to a position above the mounting position 110, and is lowered to set the tip 119.

The nozzle 203 (FIG. 2) can rotate in a horizontal plane and move up and down, and after rotating above the mounting position 110, the nozzle 203 is lowered, and the tip 119 is press-fitted and mounted on a distal end of the nozzle 203. The nozzle 203 on which the tip 119 is mounted moves to a position above the sample container 102 placed on the transport rack 101, and then is lowered to aspirate a predetermined amount of the sample held in the sample container 102. The nozzle 203 that aspirates the sample moves to a position above the incubator 104, and then is lowered to discharge the sample to the unused reaction container 105 held in the incubator 104. When the discharge is completed, the nozzle 203 moves to a position above the disposal hole 109, and discards the used tip 119 from the disposal hole 109.

A plurality of reagent containers 118 are set in a reagent disk 111. A cover 112 (a part of which is removed in an illustrated example to visualize an inside) is provided at an upper part of the reagent disk 111, and an inside of the reagent disk 111 is kept at a predetermined temperature. An opening portion 113 is provided in a part of the cover 112. A nozzle 114 can rotate in the horizontal plane and move up and down, and the nozzle 114 rotates above the opening portion 113, and then is lowered to immerse a distal end of the nozzle 114 in a reagent in the predetermined reagent container 118 and aspirate a predetermined amount of the reagent. Next, the nozzle 114 moves upward, then rotates above a predetermined position of the incubator 104, and discharges the reagent into the reaction container 105.

The reaction container 105 into which the sample and the reagent are discharged move to a predetermined position by the rotation of the incubator 104, and are transported to the stirring mechanism 108 by the transport mechanism 106. The stirring mechanism 108 stirs and mixes the sample and the reagent in the reaction container 105 by applying a rotation motion to the reaction container 105. The reaction container 105 after a completion of the stirring is returned to the predetermined position of the incubator 104 by the transport mechanism 106.

Nozzles 115 can rotate in the horizontal plane and move up and down. The nozzle 115 moves to a position above the reaction container 105 for which the sample and the reagent are dispensed, stirring is completed, and a predetermined reaction time has passed in the incubator 104, is lowered, and aspirates the reaction liquid in the reaction container 105. The reaction liquid aspirated by the nozzles 115 is analyzed by detection units 116. The reaction container 105 from which the reaction liquid is aspirated moves to the predetermined position by the rotation of the incubator 104, moves from the incubator 104 to a position above the disposal hole 109 by the transport mechanism 106, and is discarded in the disposal hole 119 hole.

In the illustrated example, aspiration and discharge of the fluids that are the sample, the reagent, and the reaction liquid are independently performed by the nozzles 203, 114, 115, respectively, and the alignment of the nozzle 203 is mainly described in the present description. In another embodiment, the automatic analyzer 100 includes one nozzle (not illustrated) that aspirates and discharges the fluids by performing cleaning with a cleaning liquid, and alignment of the nozzle is performed in the same manner as the alignment of the nozzle 203 to be described below. In still another embodiment, alignment of the nozzles 114, 115 is performed in the same manner as the alignment of the nozzle 203 to be described below.

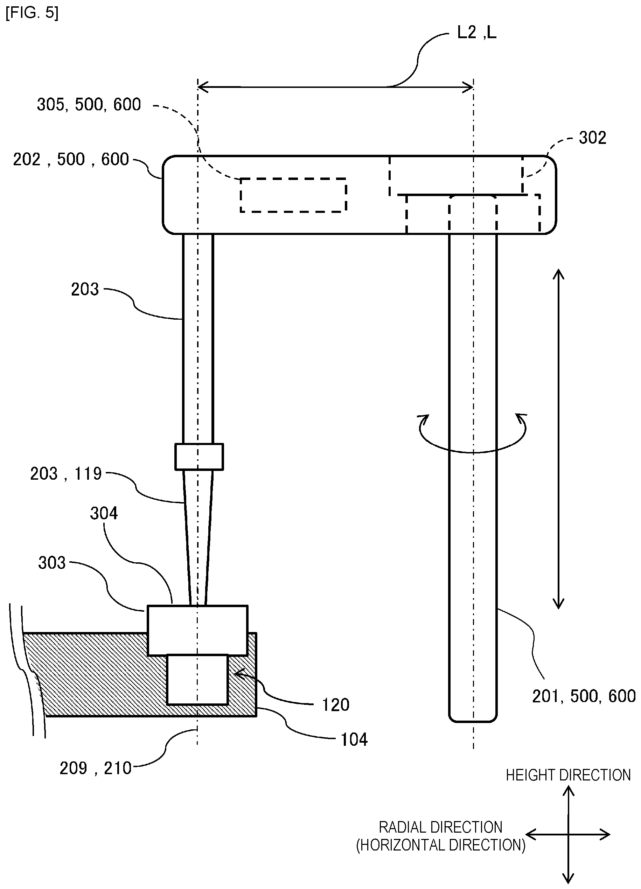

The automatic analyzer 100 includes an arithmetic control device 800 that controls a rotation mechanism 400 (FIG. 3A), a height positioning mechanism 500 (FIG. 5), and a circumferential positioning mechanism 600 (FIG. 5). Although not shown, the arithmetic control device 800 includes, for example, a central processing unit (CPU), a random access memory (RAM), and a read only memory (ROM). The arithmetic control device 800 is embodied by loading a predetermined control program stored in the ROM into the RAM and executing the control program by the CPU.

FIG. 2 is a diagram showing dispensing of the sample and the reagent by the nozzle 203. The nozzle 203 performs at least one of aspiration of a reaction liquid (an example of the fluid) in the reaction container 105 accommodated in an accommodation portion 120 disposed on a circumference 204 that is the trajectory during rotation and discharge of the sample and the reagent (an example of the fluid) into the reaction container 105. The nozzle 203 is set below a distal end of an arm 202 attached to a rotation shaft 201.

The accommodation portion 120 is provided in the incubator 104 in which the reaction containers 105 (an example of the container) capable of accommodating the sample and the reagent that are all used as the fluid are continuously arranged in a circumferential direction, or at least one of the transport rack 101, the reagent disk 111, and a cleaning liquid holder (not illustrated) (an example of the holder) that hold the container accommodating at least one of the sample, the reagent, and the cleaning liquid for cleaning the nozzle 203 that are all used as the fluid. In this way, it is possible to perform alignment on the containers such as the sample containers 102, the reaction containers 105, and the reagent containers 118 that are accommodated in the accommodation portion 120.

When at least two of the sample, the reagent, and the cleaning liquid are aspirated and discharged by one nozzle 203, the cleaning liquid is used, and when the nozzles 203 that aspirate and discharge the sample, the reagent, or the cleaning liquid are provided, the cleaning liquid may not be used. In the illustrated example, the cleaning liquid is not used. During rotation, the nozzle 203 passes through the respective points of the mounting position 110, a sample aspirating position 207 on the transport rack 101, a sample discharging position 209 on the incubator 104, and the disposal hole 109.

FIG. 3A is a diagram illustrating alignment of the nozzle 203 in a radial direction and is a diagram illustrating a state before the alignment. The automatic analyzer 100 includes the rotation mechanism 400 that rotates the nozzle 203 in the circumferential direction in the horizontal plane, and the rotation mechanism 400 includes the rotation shaft 201, a motor (not illustrated) that rotates the rotation shaft 201 in the circumferential direction, the arm 202, a detection mechanism 305, and the like. The rotation mechanism 400 is connected to the arithmetic control device 800 (FIG. 1) by an electric signal line (not illustrated).

The nozzle 203 has a shape whose outer diameter changes in a height direction, and is equipped with the tip 119 having a shape narrowing downward, for example, a conical shape. By being equipped with the tip 119, an aspiration pressure due to thinning of the distal end can be reduced, and scattering of the fluid during discharge can be prevented.

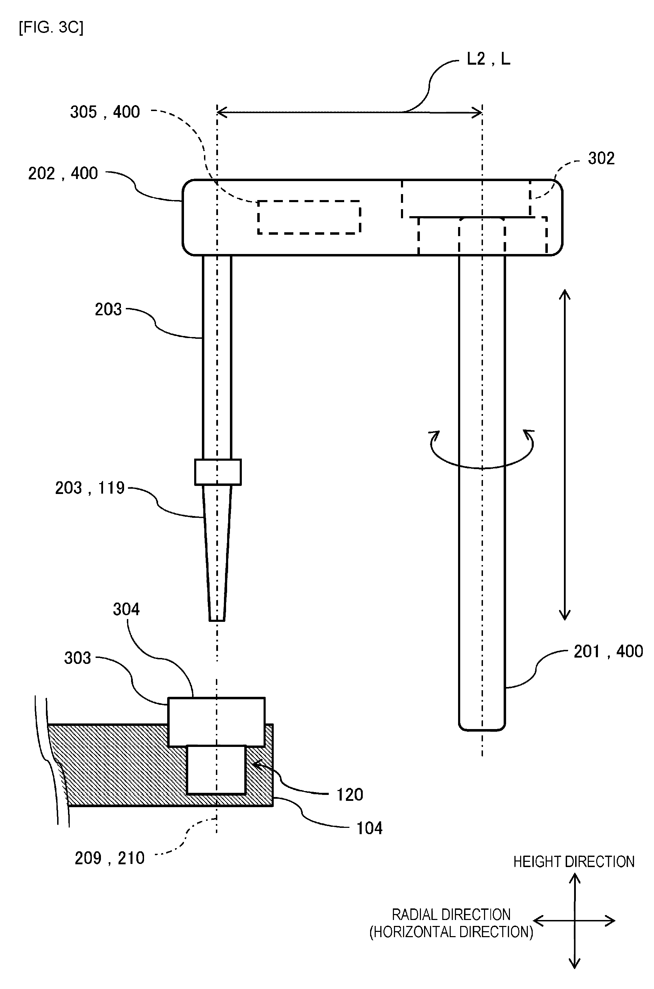

In the automatic analyzer 100, the nozzle 203 is aligned in both the radial direction and the circumferential direction. From a viewpoint of preventing contact with the reaction container 105 and reducing a dead volume as much as possible, the nozzle 203 is preferably located at a center with respect to aspiration and discharging positions. However, a rotating radius L of the nozzle 203 may deviate from the sample discharging position 209 in design due to an influence of accuracy of machine processing of a base (the arm 202 or the like) by which the mechanisms are grounded, deflection of the base, accumulation tolerance in the mechanism, an assembly error, squareness of the nozzle 203, and the like. Therefore, by performing the alignment in the radial direction, the actual rotating radius L1 can be brought closer to an ideal rotating radius L2 in design (FIG. 3C).

The automatic analyzer 100 includes an adjustment mechanism 302 that adjusts at least one of a radial position of the nozzle 203 and an angle of the nozzle 203 with respect to the rotation shaft 201 around which the nozzle 203 rotates. By providing the adjustment mechanism 302, it is possible to adjust the radial position of the nozzle 203 or an angle of the nozzle 203 with respect to the horizontal direction. Here, the adjustment mechanism 302 preferably adjusts both the radial position and the angle. By adjusting the angle, it is possible to absorb deflection of the arm 202, tilting of the rotation shaft 201, and bending of the nozzle 203. The adjustment mechanism 302 is, for example, a feed screw or an actuator. In addition, the adjustment mechanism 302 may be configured such that, for example, a screw hole for fastening is an oval hole and a screw can be shifted inside the oval hole.

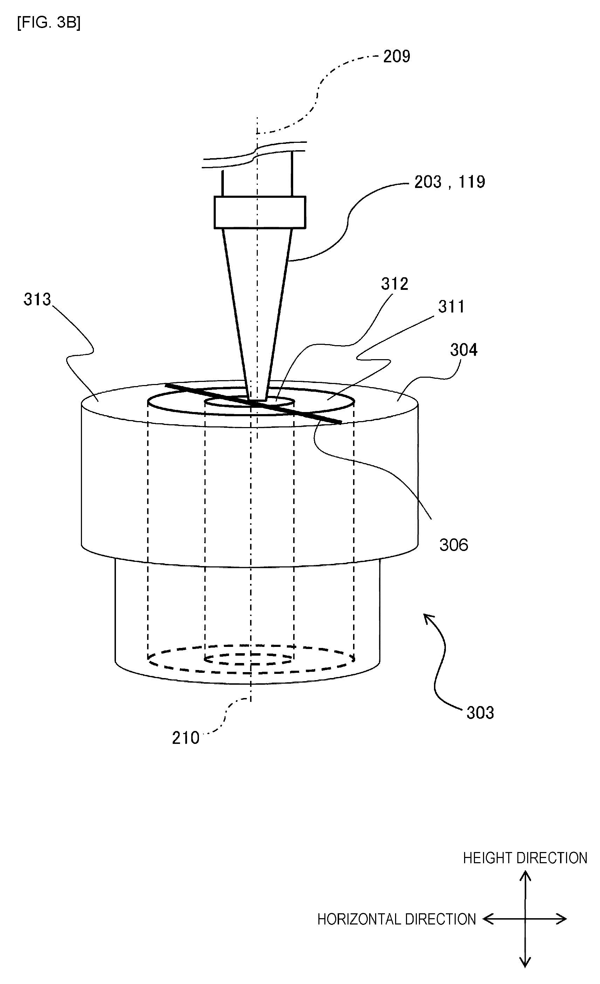

FIG. 3B is a perspective view of the position adjustment tool 303. The position adjustment tool 303 can be accommodated in the accommodation portion 120 (FIG. 3A) for the reaction container 105 (an example of the container in FIG. 1) in which a fluid, such as the reaction liquid, to be aspirated or discharged by the nozzle 203 (FIG. 3A) rotatable in the horizontal plane in the automatic analyzer 100 is accommodated. The position adjustment tool 303 protrudes upward from the accommodation portion 120 when accommodated in the accommodation portion 120 (FIG. 3A), and has a flange-shaped structure in the protruding portion. The protruding portion has a circular shape having a radius R in a top view.

The position adjustment tool 303 has, on an upper end surface 304, an adjustment mark 306 indicating an arc of a part of the circumference 204 (FIG. 2) that is a trajectory of the nozzle 203 during rotation. According to the position adjustment tool 303, a user can easily perform the alignment in the radial direction by adjusting at least one of the radial position and the angle of the nozzle 203 such that the distal end of the nozzle 203 is disposed above the adjustment mark 306 by visual observation.

The adjustment mark 306 is a mark serving as a guide of the rotating radius L (FIG. 3A) of the nozzle, and the user adjusts the rotating radius L of the nozzle 203 by operating the adjustment mechanism 302 (FIG. 3A) so as to match the adjustment mark 306. The adjustment mark 306 may be a mark-off line, a groove, a color indicating an allowable adjustment range, a hole indicating a center, a point, or the like, which has good visibility. The position adjustment tool 303 has, on a side wall, a bottom surface, or the like, unevenness (not illustrated) that prevents rotation of the position adjustment tool 303. Accordingly, the adjustment mark 306 serving as a guide for adjustment does not deviate.

As will be described in detail later, after completion of the alignment, it is determined whether the alignment is appropriate. **The** position adjustment tool 303 includes a core 311 exposed from the upper end surface 304, a surface layer portion 313, and an insulating layer 312. **The** surface layer portion 313 is disposed outside the core 311, exposed from the upper end surface 304, and is different from the core 311 in at least one of a volume and a dielectric constant. **The** insulating layer 312 insulates the core 311 from the surface layer portion 313.

**The** rotation mechanism 400 (FIG. 3A) includes the detection mechanism 305 (FIG. 3A) that detects the contact to the nozzle 203 based on a change in capacitance, and contact between the nozzle 203 and the position adjustment tool 303 is detected based on the change in capacitance. By configuring the position adjustment tool 303 as described above, the contact with a center of the position adjustment tool 303 due to contact with the core 311 can be detected by the change in capacitance, and the contact of the nozzle 203 from a side due to contact with the surface layer portion 313 can also be detected by the change in capacitance.

Which one of the core 311 and the surface layer portion 313 the contact is made with can be determined based on, for example, whether the capacitance detected by the detection mechanism 305 exceeds a threshold. The determination can be made by, for example, the arithmetic control device 800 (FIG. 1) connected to the detection mechanism 305 via an electric signal line (not illustrated).

The core 311 is disposed at a position corresponding to a center portion (which may be near the center in FIG. 3A) of the reaction container 105 (an example of the container in FIG. 1). A center line 210 of the position adjustment tool 303 coincides with a center line (not shown. An intersection of diagonal lines in a case of a rectangle) of the reaction container 105, and coincides with the sample discharging position 209 when the alignment is accurately performed as illustrated in the drawing. Accordingly, the nozzle 203 (FIG. 3A) can be disposed at the center portion of the reaction container 105 by detecting the contact with the core 311 when the reaction container 105 (FIG. 2) is accommodated in the accommodation portion 120 (FIG. 3A).

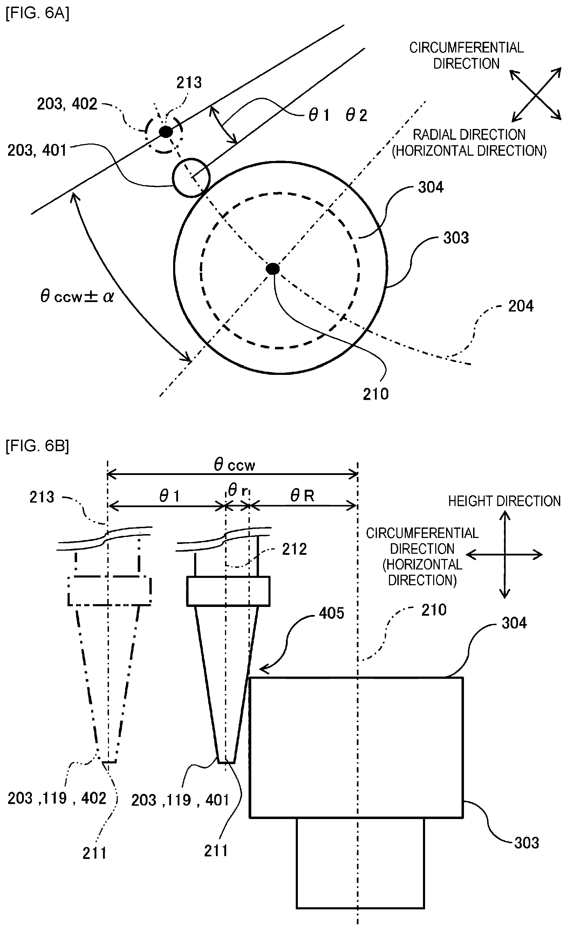

A shape of the position adjustment tool 303 is not limited to the illustrated example, and may be any shape as long as a distance from a contact point 405 (FIG. 6B) to the center line 210 of the position adjustment tool 303 can be calculated.

FIG. 3C is a diagram showing the alignment of the nozzle 203 in the radial direction and is a diagram showing a state after the alignment. When the user visually adjusts the nozzle 203 above the adjustment mark 306 (FIG. 3B) of the position adjustment tool 303, the sample discharging position 209 of the nozzle 203 coincides with the center line 210 of the position adjustment tool 303, which is located at the same position as the center portion of the reaction container 105.

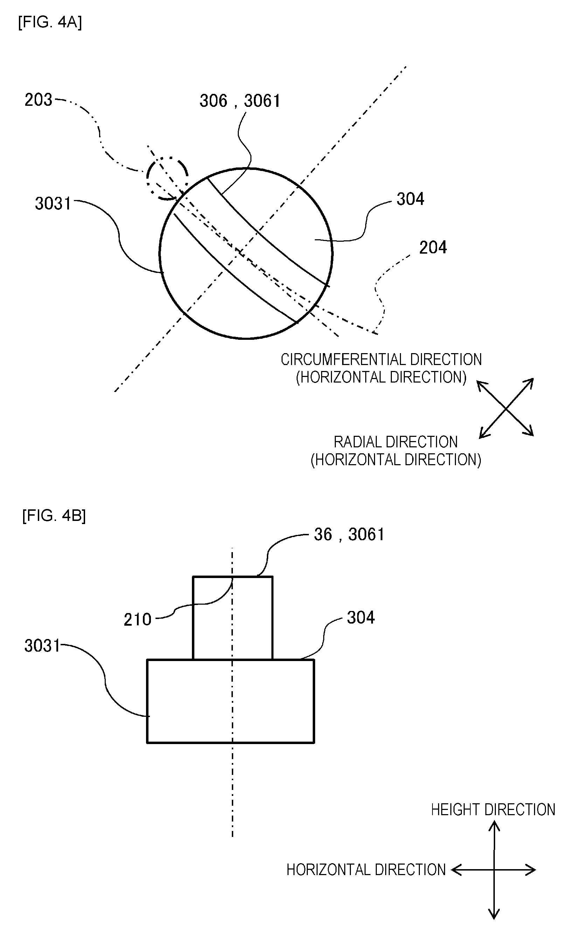

FIG. 4A is a top view of a position adjustment tool 3031 according to another embodiment. FIG. 4B is a side diagram of the position adjustment tool 3031 according to the other embodiment. In the position adjustment tool 3031, the adjustment mark 306 is a convex portion 3061 formed on the upper end surface 304 as shown in FIG. 4B, and the convex portion 3061 is formed as a part of the arc of the circumference 204. By providing the convex portion 3061, when the nozzle 203 comes into contact with the upper end surface 304 other than the convex portion 3061, it is possible to detect that the nozzle 203 does not come into contact with the convex portion 3061 based on a difference in height. A width of the convex portion 3061 in the radial direction can be, for example, the same as a size (generally, a diameter) of the core 311 (FIG. 3B). The user may operate the adjustment mechanism 302 (FIG. 3A) such that the nozzle 203 is disposed above the convex portion 3061. For example, as described above with reference to FIG. 3B, the detection at the time of contact from the side can be performed by, for example, configuring a side surface with a material that is different from the convex portion 3061 in at least one of the volume and the dielectric constant.

FIG. 5 is a view showing a state in which the nozzle 203 is brought into contact with the upper end surface 304 of the position adjustment tool 303. The automatic analyzer 100 (FIG. 1) includes a height positioning mechanism 500 that performs, by driving the nozzle 203, positioning of the position adjustment tool 303 accommodated in the accommodation portion 120 in the height direction. In the illustrated example, the height positioning mechanism 500 includes the rotation shaft 201, the arm 202, a lowering mechanism (not shown) that lowers the nozzle 203, and the detection mechanism 305. The height positioning mechanism 500 is connected to the arithmetic control device 800 (FIG. 1) by an electric signal line (not shown).

The determined height position is, for example, a deviation (difference) of an actual height position with respect to a height position of the upper end surface 304 of the position adjustment tool 303 in design. Such a deviation can be determined, for example, based on a lowering distance in design and an actual lowering distance of the nozzle 203, and may be referred to as a "height adjustment value" below. The height adjustment value is calculated by, for example, the arithmetic control device 800 (FIG. 1) and stored. In addition, when analyzing the sample, the nozzle 203 moves in the height direction based on an amount obtained by adding or subtracting the height adjustment value to or from a design value.

The height positioning mechanism 500 determines the height position of the position adjustment tool 303 by detecting a contact position between the nozzle 203 and the upper end surface 304 of the position adjustment tool 303, and the contact position is detected by lowering the nozzle 203. That is, after the adjustment of the alignment of the nozzle 203 in the radial direction, the height positioning mechanism 500 lowers the nozzle 203 by the lowering mechanism (not shown) to bring the nozzle 203 into contact with the position adjustment tool 303. Accordingly, the height position of the position adjustment tool 303 can be determined. If the nozzle 203 is accurately positioned in the radial direction, the nozzle 203 comes into contact with the core 311 (FIG. 3B). However, when the position adjustment is defective, the nozzle 203 may come into contact with the surface layer portion 313 or may not come into contact with the position adjustment tool 303. In this case, the alignment in the radial direction is performed again.

The nozzle 203 is able to aspirate and discharge at least one of the sample, the reagent, and the cleaning liquid for the nozzle 203 that are used as the fluid. Therefore, the nozzle 203 is used to detect both contact with at least one fluid of the sample, the reagent, and the cleaning liquid, and contact with the position adjustment tool 303. At least a lower end portion of the nozzle 203 is made of resin, and specifically, for example, the nozzle 203 includes the tip 119 (FIG. 3A) made of resin. The arithmetic control device 800 (FIG. 1) sets a detection sensitivity of the detection mechanism 305 to the position adjustment tool 303 to be higher than a detection sensitivity of the fluid.

When height adjustment is performed for the nozzle 203 made of metal, a change in capacitance caused by the contact is large, and therefore, the contact with the solid position adjustment tool 303 can be easily detected. However, when a contact portion with the position adjustment tool 303 is made of resin, a contact area is small and the contact with the solid position adjustment tool 303 is hardly detected by the detection mechanism 305 adjusted to capture the change in capacitance caused by the contact with the fluid. Therefore, by making the detection sensitivity during contact detection higher than the detection sensitivity during fluid contact, it is possible to easily detect the contact with the position adjustment tool 303.

FIG. 6A is a top view at the time of the alignment in the circumferential direction from one direction (counterclockwise in the illustrated example). FIG. 6B is a side view at the time of the alignment in the circumferential direction from one direction. The automatic analyzer 100 (FIG. 1) includes a circumferential positioning mechanism 600 that performs positioning, in a circumferential direction, of the accommodation portion 120 accommodating the position adjustment tool 303 by bringing the nozzle 203 into contact with the position adjustment tool 303 from a side thereof after the height position of the position adjustment tool 303 is determined. The circumferential positioning mechanism 600 includes the rotation shaft 201 (FIG. 5), the arm 202 (FIG. 5), a lowering mechanism (not shown), and the detection mechanism 305 (FIG. 5). The circumferential positioning mechanism 600 is connected to the arithmetic control device 800 (FIG. 1) by an electric signal line (not shown).

The circumferential positioning mechanism 600 brings the nozzle 203 closer to the position adjustment tool 303 from the side of the position adjustment tool 303 as shown in FIG. 6A in a state in which a lower end 211 of the nozzle 203 is disposed at a position below the upper end surface 304 of the position adjustment tool 303 as shown in FIG. 6B. Accordingly, the nozzle 203 can come into contact with the position adjustment tool 303 from the side thereof, and a circumferential position of the position adjustment tool 303 can be determined based on the contact position.

When the nozzle 203 is rotated counterclockwise as shown in FIGS. 6A and 6B, a movement amount of the nozzle 203 in a counterclockwise direction is adjusted as follows.

The circumferential positioning mechanism 600 moves the nozzle 203 to a stop position before adjustment 402 which is a predetermined position away from the position adjustment tool 303. The circumferential positioning mechanism 600 lowers the lower end 211 of the nozzle 203 to a position below the upper end surface 304 of the position adjustment tool 303. Thereafter, the circumferential positioning mechanism 600 rotates the arm 202 around the rotation shaft 201 to be slowly brought closer to the position adjustment tool 303, and stops rotating the nozzle 203 when the detection mechanism 305 (FIG. 5) comes into contact with the nozzle 203. At this time, the nozzle 203 is present at a contact position 401 that is a position where the nozzle 230 is present when the nozzle 230 comes into contact with the position adjustment tool 303. An actual measurement value θ2 of a predetermined distance between the stop position before adjustment 402 and the contact position 401 is recorded in the arithmetic control device 800 (FIG. 1).

The arithmetic control device 800 (FIG. 1) calculates adjustment values α, β (described later) that are differences between a design value θ1 of a distance between the contact position 401 and the stop position before adjustment 402 and the actual measurement value θ2 related to the predetermined distance when the nozzle 203 is moved by the circumferential positioning mechanism 600. Accordingly, an actual deviation with respect to the design value θ1 can be calculated as a difference based on the actual measurement value θ2, and a degree of the deviation in the circumferential direction can be evaluated. Here, a circumferential angle is used as the predetermined distance, and the arithmetic control device 800 calculates the adjustment value α that is the difference between the design value θ1 and the actual measurement value θ2. In addition, when analyzing the sample, the nozzle 203 is moved in the circumferential direction based on amounts obtained by adding or subtracting the adjustment values α, β to or from the design value θ1 and a design value θ3, respectively.

A design value of a distance between a center line 213 (coincident with the sample discharging position 209) of the nozzle 203 positioned at the stop position before adjustment 402 and the center line 210 of the position adjustment tool 303 is θccw, and an actual measurement value is obtained by adding or subtracting the adjustment value α to or from θccw (θccw ± α). A distance between a center line 212 of the nozzle 203 when the nozzle 203 is present at the contact position 401 and the contact point 405 between the position adjustment tool 303 and the nozzle 203 is θr. The distance between the contact point 405 and the center line 210 of the position adjustment tool 303 is θR. θccw = θ1 + θr + θR is satisfied.

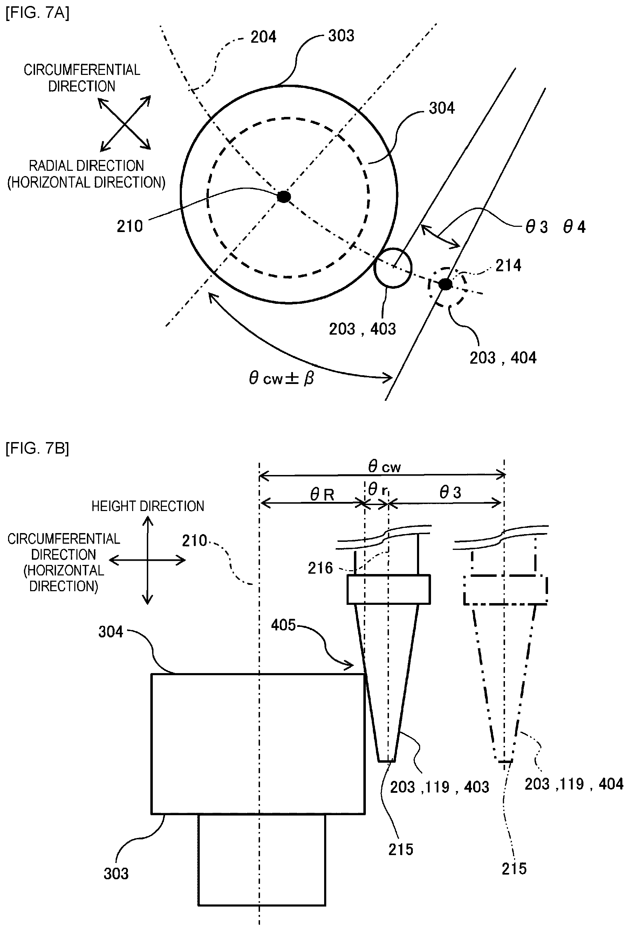

FIG. 7A is a top view at the time of alignment in the circumferential direction from the other direction (clockwise in the illustrated example). FIG. 7B is a side view at the time of the alignment in the circumferential direction from the other direction. The circumferential positioning mechanism 600 determines the distance between a stop position before adjustment 404 and a contact position 403 in the same manner as in FIGS. 6A and 6B except that the approaching direction is reversed. The arithmetic control device 800 (FIG. 1) calculates the adjustment value β that is a difference between the design value θ3 of a predetermined distance between the contact position 403 and the stop position before adjustment 404 and an actual measurement value θ4 related to the predetermined distance when the nozzle 203 is moved by the circumferential positioning mechanism 600.

A design value of a distance between a center line 214 of the stop position before adjustment 404 and the center line 210 of the position adjustment tool 303 is θcw, and an actual measurement value is obtained by adding or subtracting β to or from θcw (θccw ± β). A distance between the contact point 405 and a center line 215 of the nozzle 203 when the nozzle 203 is present at the contact position 403 is θr. A distance between the contact point 405 and the center line 210 of the position adjustment tool 303 is θR. θcw = θ3 + θr + θR is satisfied.

Accordingly, the circumferential positioning mechanism 600 (FIG. 5) brings the nozzle 203 closer to the position adjustment tool 303 from the one direction of the circumferential direction and brings the nozzle 203 closer to the position adjustment tool 303 from the other direction of the circumferential direction. The arithmetic control device 800 (FIG. 1) calculates the adjustment values α, β when the nozzle 203 is brought closer to the position adjustment tool 303 in the directions, respectively. When the nozzle 203 is disposed at an appropriate position, the distance between the center line 213 (FIG. 6A) of the stop position before adjustment 402 and the center line 210 of the position adjustment tool 303 and the distance between the center line 214 of the stop position before adjustment 404 and the center line 210 of the position adjustment tool 303 generally coincide with each other. Therefore, by respectively calculating the adjustment values α, β when the nozzle 203 is brought closer to the position adjustment tool 303 in the directions, an accuracy of positioning in the circumferential direction can be improved.

When the rotation mechanism 400 (FIG. 3A), the height positioning mechanism 500 (FIG. 5), and the circumferential positioning mechanism 600 (FIG. 5) drive the nozzle 203 by using, for example, a gear, there is a possibility that the driving is influenced by a back crash. In addition, when the rotation mechanism 400, the height positioning mechanism 500, and the circumferential positioning mechanism 600 detect a stop by, for example, a detector and a detection plate (both not shown), a timing at which the detector detects the detection plate may be different between rotation in the one direction and rotation in the other direction due to an assembly error, and a stop position of the nozzle 203 may be shifted. Therefore, in the automatic analyzer 100, the nozzle 203 is brought closer from the two directions that are the one direction and the other direction to perform the positioning in the circumferential direction. Accordingly, it is possible to prevent the stop position from being shifted in each of the one direction and the other direction. However, when the nozzle 203 can stop at only one of the contact positions 401, 403, only a corresponding side may be adjusted.

The calculation of the design values θ1, θ3 (FIGS. 6A and 7A) can be determined based on, for example, the rotating radius L (FIG. 3A) of the nozzle 203, the distance from the contact point 405 to the center line 210 of the position adjustment tool 303, rotational resolutions of the rotation mechanism 400 (FIG. 3A), the height positioning mechanism 500 (FIG. 5), and the circumferential positioning mechanism 600 (FIG. 5), and the like. The design values θ1, θ3 can be expressed by the design value θ1 = θccw - (θr + θR) as shown in FIG. 6B and the design value θ3 = θcw - (θr + θR) as shown in FIG. 7B, respectively.

When the nozzle 203 has a cylindrical shape, that is, when the nozzle 203 has a shape that is the same in the height direction, a radius of the nozzle 203 is the same regardless of the height direction, and therefore, the distance θr from the contact point 405 to the center lines 212, 216 of the nozzle 203 can be calculated regardless of a lowering amount of the nozzle 203. In addition, the distance θR from the contact point 405 to the center line 210 of the position adjustment tool 303 can also be calculated based on a radius of the position adjustment tool 303.

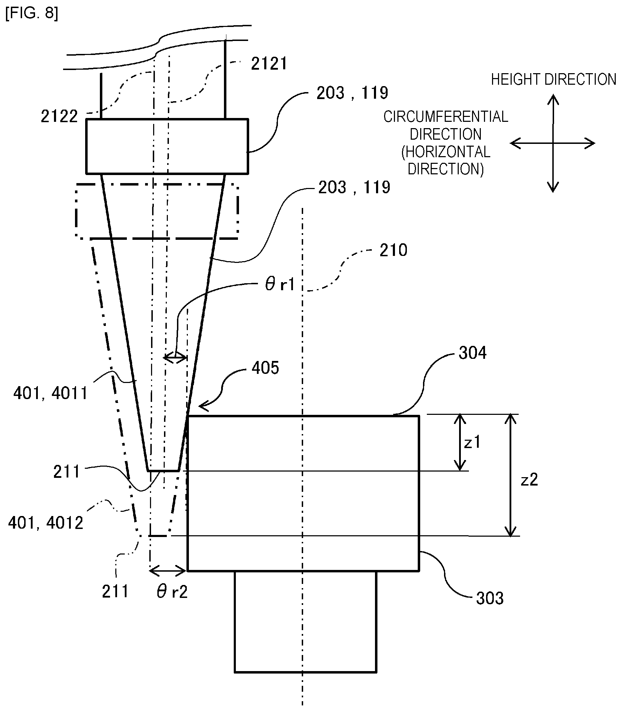

FIG. 8 is a diagram illustrating a distance between a height position of the nozzle 203 having a shape whose outer diameter changes in the height direction and a distance between the nozzle 203 and a center line 210 of the position adjustment tool 303. When the nozzle 203 is equipped with, for example, the tip 119, the outer diameter of the nozzle 203 changes in the height direction, and specifically, the nozzle 203 has a shape narrowing downward. Therefore, a height position of the contact point 405 on the nozzle 203 changes depending on the lowering amount of the nozzle 203, and the distance between the center line 212 and the contact point 405 changes.

For example, at a contact position 4011 at which the nozzle 203 is located above, a distance between the upper end surface 304 of the position adjustment tool 303 and the lower end 211 of the nozzle 203 is z1. At this time, a distance between a center line 2121 and the contact point 405 is θr1. On the other hand, at a contact position 4012 at which the nozzle 203 is located below, a distance between the upper end surface 304 of the position adjustment tool 303 and the lower end 211 of the nozzle 293 is z2. At this time, a distance between the center line 2122 and the contact point 405 is θr2. Therefore, the distance θr changes depending on the height position of the nozzle 203, and the adjustment values α, β with respect to the design values θ1, θ3 (FIGS. 6A and 7A) cannot be uniquely calculated.

Therefore, in the automatic analyzer 100, the height positioning mechanism 500 performs the positioning in the height direction, and then the circumferential positioning mechanism 600 performs the positioning in the circumferential direction. Specifically, the arithmetic control device 800 (FIG. 1) performs the positioning of the position adjustment tool 303 in the circumferential direction based on the contact position of the nozzle 203 with respect to the position adjustment tool 303 in the height direction, that is, the height position of the contact point 405. Accordingly, a positional relation between a distal end position of the nozzle 203 lowered at the stop positions before adjustment 402, 404 (FIGS. 6B and 7B) and the height position of the contact point 405 of the position adjustment tool 303 can be understood. The distance θr between each of the center lines 212, 216 and the contact point 405 can be determined based on the height position of the contact point 405, and the adjustment values α, β can be calculated. The determined distance θr is stored in a storage unit (not shown) of the arithmetic control device 800 (FIG. 1).

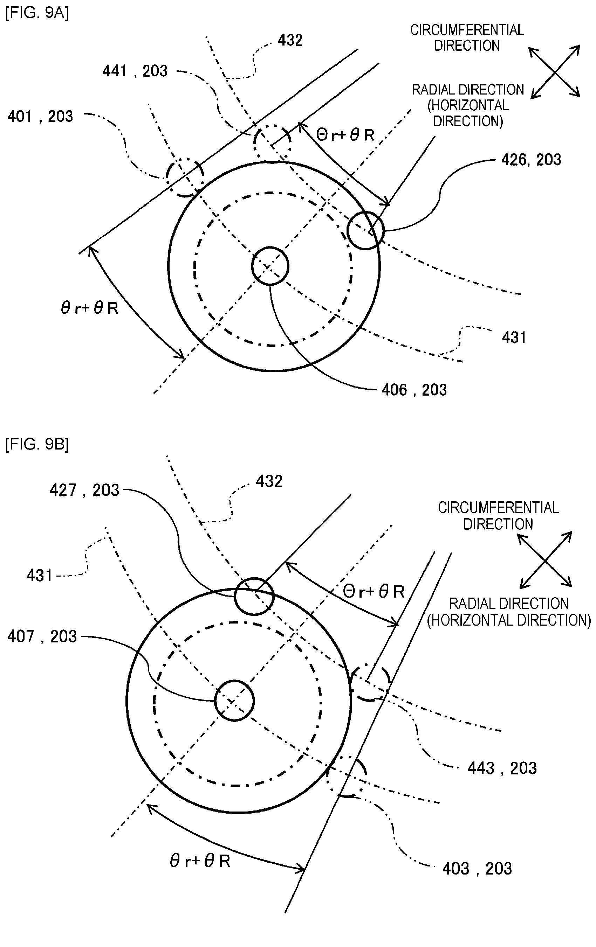

FIG. 9A is a top view illustrating a case in which alignment is correct and a case in which alignment is incorrect, and is a view illustrating a state in which contact is made from one direction. FIG. 9B is a top view illustrating a case in which alignment is correct and a one direction. FIG. 9B is a top view illustrating a case in which alignment is correct and a case in which alignment is incorrect, and is a view illustrating a state in which contact is made from the other direction. In FIGS. 9A and 9B, as an example, circumferences 421, 431 on an outer peripheral side indicate trajectories of the nozzle 203 when the alignment is correct, and circumferences 422, 432 on an inner peripheral side indicate trajectories of the nozzle 203 when the alignment is incorrect.

After the appropriate alignment is performed, a stop position after adjustment 406 (FIG. 9A) and a stop position after adjustment 407 (FIG. 9B) substantially coincide with each other. The stop position after adjustment 406 is a position to which the nozzle 203 moves from the contact position 401 toward the one direction by a distance θr + θR. θr + θR = (θccw ± α) - θ1 is satisfied. The stop position after adjustment 407 is a position to which the nozzle 203 moves from the contact position 403 toward the other direction by the distance θr + θR. θr + θR = (θcw ± β) - θ3 is satisfied. However, in a case in which radial position adjustment of the nozzle 203 performed by the adjustment mechanism 302 (FIG. 3A) is incorrect, stop positions after adjustment 426, 427 when the adjustment values α, β are applied based on incorrect reference positions 441, 443 are different positions in a case of being brought closer from the one direction (FIG. 9A) and a case of being brought closer from the other direction (FIG. 9B).

Therefore, the arithmetic control device 800 (FIG. 1) determines a validity of a radial position of the nozzle 203 based on the stop positions after adjustment 406, 407 (an example of the positions) of the nozzle 203 after respective movements of the nozzle 203 from the one direction and the other direction by the distances obtained by adding or subtracting the adjustment values α, β to or from the design values θ1, θ3 respectively. Accordingly, appropriateness of radial positioning performed by the user can be determined using the adjustment values α, β obtained by actually driving the nozzle 203. The validity may be determined by actually moving the nozzle 203 or may be determined by calculation. For example, when the nozzle 203 is driven by a pulse motor (not illustrated) configured to move by a predetermined amount for each pulse and the validity is determined by actually moving the nozzle 203, a degree of movement can be determined by measuring a total number of pulses from a start of the alignment. In addition, a position may be determined using an encoder (not illustrated).

The arithmetic control device 800 determines the stop positions after adjustment 406, 407 based on the distance θr stored in the storage unit (not illustrated) of the arithmetic control device 800. When the stop positions after adjustment 406, 407 reflecting the adjustment values α, β are different (for example, the stop positions after adjustment 426, 427), the arithmetic control device 800 alarms the user through an alarm unit (not illustrated) of the arithmetic control device 800. Accordingly, it is possible to prompt the user to perform the alignment in the radial direction again. The stop positions after adjustment 406, 407 do not need to strictly coincide with each other, and for example, a deviation that does not influence the alignment in the radial direction can be allowed.

In another embodiment, the arithmetic control device 800 (FIG. 1) determines the validity of the radial position of the nozzle 203 by determining whether the adjustment values α, β are in a predetermined range. Since the determination is made using whether the adjustment values α, β are in the predetermined range as an index, determination time can be shortened. The predetermined range can be freely set as, for example, a range in which a sample or the like does not adhere to an inner wall during the discharge to the reaction container 105, or a range in which the stirring can be promoted inside during the discharge to the reaction container 105.

FIG. 10 is a flowchart showing an automatic adjustment method. The automatic adjustment method is performed, for example, in the automatic analyzer 100 (FIG. 1), and the mechanisms are controlled by the arithmetic control device 800 (FIG. 1). The automatic adjustment method is started by pressing a button (not illustrated) for executing automatic adjustment. The button may be a physical button or a button displayed on a user interface (UI) such as a display unit.

When the button is pressed, the arithmetic control device 800 prompts the user to set the position adjustment tool 303 (FIG. 3B) in the accommodation portion 120, and the user sets the position adjustment tool 303 (step S1). For example, the user can set the position adjustment tool 303 in the accommodation portion 120 at a position displayed on a display unit (not illustrated) of the automatic analyzer 100. The position adjustment tool 303 may be automatically set by, for example, any setting mechanism (not illustrated) constituting the automatic analyzer 100. After the setting, the user operates the adjustment mechanism (FIG. 3A) 302 to align the nozzle 203 in the radial direction along the adjustment mark 306 (FIG. 3B).

Next, when the button is pressed again, the arithmetic control device 800 mounts the tip 119 (FIG. 3A) to the nozzle 203 at the mounting position 110 and switches a sensitivity of the detection mechanism 305 for height adjustment (step S2). When the tip 119 is not mounted, or when a lower portion of the nozzle 203 is made of, for example, metal, step S2 can be omitted. The arithmetic control device 800 moves the nozzle 203 to a height adjusting position above the position adjustment tool 303 (step S3) and lowers the nozzle 203 (step S4). The movement and the lowering are performed by the height positioning mechanism 500 (FIG. 5).

In a case in which the detection mechanism 305 (FIG. 3A) detects the contact between the nozzle 203 and the position adjustment tool 303 (Yes in step S5), the arithmetic control device 800 calculates and stores a height adjustment value (step S6). On the other hand, in a case in which the contact is not detected (No in step S6), the arithmetic control device 800 alarms, through the alarm unit (not illustrated), the user that the position adjustment tool 303 is not correctly set (step S7). The steps S3 to S7 are height positioning steps, in which the position adjustment tool 303 accommodated in the accommodation portion 120 (FIG. 2) is positioned in the height direction by driving the nozzle 203.

After the contact is detected, the arithmetic control device 800 controls the circumferential positioning mechanism 600 (FIG. 5) to move the nozzle 203 to one stop position before adjustment 402 (FIG. 6A) (step S8) and lower the nozzle 203 by a predetermined amount (step S9). The predetermined amount is a distance by which the nozzle 203 does not come into contact with the position adjustment tool 303 when the nozzle 203 is lowered to a position away from the position adjustment tool 303, but comes into contact with the position adjustment tool 303 when the nozzle 203 is lowered to a position near the position adjustment tool 303. In a case in which the nozzle 203 can be lowered by the predetermined amount (Yes in step S9), the arithmetic control device 800 controls the circumferential positioning mechanism 600 to move the nozzle 203 toward the position adjustment tool 303 (step S10). On the other hand, in a case in which the nozzle 203 comes into contact with the position adjustment tool 303 during the lowering by the predetermined amount but cannot be lowered by the predetermined amount (No in step S9), the arithmetic control device 800 alarms the user through the alarm unit (not illustrated) (step S11).

In a case in which the detection mechanism 305 (FIG. 3A) detects the contact (Yes in step S12) during movement toward the position adjustment tool 303 from the one direction, the arithmetic control device 800 stores a movement amount of the nozzle 203 until detection (step S14). The movement amount is the actual measurement value θ2 (FIG. 6A) corresponding to the design value θ1 (FIG. 6A), and coincides with a value obtained by adding the adjustment value α to the design value θ1. On the other hand, in a case where the contact cannot be detected even after the movement by the predetermined amount (No in step S12), the arithmetic control device 800 alarms the user through the alarm unit (not illustrated) (step S13).

After the contact is detected by the movement from the one direction, the contact is detected by moving the nozzle 203 from the other direction in the same manner. That is, the arithmetic control device 800 controls the circumferential positioning mechanism 600 to move the nozzle 203 to the other stop position before adjustment 404 (FIG. 7A) (step S15) and lower the nozzle 203 by the predetermined amount (step S16). The predetermined amount has the same definition with that in step S9. In a case in which the nozzle 203 can be lowered by the predetermined amount (Yes in step S16), the arithmetic control device 800 controls the circumferential positioning mechanism 600 to move the nozzle 203 toward the position adjustment tool 303 (step S17). On the other hand, in a case in which the nozzle 203 comes into contact with the position adjustment tool 303 during the lowering by the predetermined amount but cannot be lowered by the predetermined amount (No in step S16), the arithmetic control device 800 alarms the user through the alarm unit (not illustrated) (step S18).

In a case in which the detection mechanism 305 (FIG. 3A) detects the contact during movement toward the position adjustment tool 303 from the other direction (Yes in step S19), the arithmetic control device 800 stores the movement amount of the nozzle 203 until the detection (step S20). The movement amount is the actual measurement value θ4 (FIG. 6B) corresponding to the design value θ3 (FIG. 6B), and coincides with a value obtained by adding the adjustment value β to the design value θ31. On the other hand, in a case in which the contact cannot be detected even after the movement by the predetermined amount (No in step S19), the arithmetic control device 800 alarms the user through the alarm unit (not illustrated) (step S21).

The arithmetic control device 800 calculates the adjustment values α, β based on the design values θ1, θ3 and the actual measurement values θ2, θ4 (step S22). The arithmetic control device 800 determines whether the alignment is appropriate based on the adjustment values α, β (step S23). The determination can be made based on, for example, whether the adjustment values α, β are out of the predetermined range, or a relative position of the stop positions after adjustment 406, 407 (FIGS. 9A and 9B). In a case in which the alignment is appropriate (Yes), the adjustment is ended, and the arithmetic control device 800 prompts the user to remove the position adjustment tool 303. In a case in which the alignment is not appropriate (No), the arithmetic control device 800 alarms the user through the alarm unit (not illustrated) (step S24).

The steps S8 to S24 are circumferential positioning steps, in which the accommodation portion 120 accommodating the position adjustment tool 303 is positioned in the circumferential direction by bringing the nozzle 203 into contact with the position adjustment tool 303 from a side thereof after the height position of the position adjustment tool 303 is determined.

According to the automatic analyzer 100 and the position adjustment method described above, the positioning can be performed in a short time.

### Reference Signs List

100: automatic analyzer
101: transport rack
102: sample container
104: incubator
105: reaction container
106: transport mechanism
107: holding member
108: stirring mechanism
109: disposal hole
110: mounting position
111: reagent disk
112: cover
113: opening portion
114, 115: nozzle
116: detection unit
117: rack transport line
118: reagent container
119: tip
120: accommodation portion
201: rotation shaft (rotation mechanism, height positioning mechanism, circumferential positioning mechanism)
202: arm (rotation mechanism, height positioning mechanism, circumferential positioning mechanism)
203: nozzle
204: circumference
207: sample aspirating position
209: sample discharging position
210, 212, 2121, 2122, 213, 214, 215, 216: center line
211: lower end
230: nozzle
302: adjustment mechanism
3021: convex portion
303, 3031: position adjustment tool
304: upper end surface
305: detection mechanism (rotation mechanism, height positioning mechanism, circumferential positioning mechanism)
3061: convex portion
306: adjustment mark
311: core
312: insulating layer
313: surface layer portion
400: rotation mechanism
401, 4011, 4012, 403: contact position
402, 404: stop position before adjustment
405: contact point
406, 408, 418: stop position after adjustment
421, 422, 431: circumference
441, 443: reference position
500: height positioning mechanism
600: circumferential positioning mechanism
800: arithmetic control device
L, L1, L2: rotating radius

## Claims

1. An automatic analyzer comprising:
a rotation mechanism (400) configured to rotate, in a circumferential direction in a horizontal plane, a nozzle (203) configured to perform at least one of aspiration of a fluid in a container accommodated in an accommodation portion (120) disposed on a trajectory during rotation and discharge of the fluid to the container;
a nozzle height positioning mechanism (500) configured to position a position adjustment tool (303) accommodated in the accommodation portion (120) in a height direction by driving the nozzle (203);
a nozzle circumferential positioning mechanism (600) configured to position the accommodation portion (120) accommodating the position adjustment tool (303) in a circumferential direction by bringing the nozzle (203) into contact with the position adjustment tool (303) from a side thereof after a height position of the position adjustment tool (303) is determined; and
an arithmetic control device (800) configured
- to control the rotation mechanism (400), the height positioning mechanism (500), and the circumferential positioning mechanism (600),
- to determine the position in a height direction of a position adjustment tool (303) accommodated in the accommodation portion (120) by driving the nozzle (203), and
- to determine the position in a circumferential direction of the accommodation portion (120) accommodating the position adjustment tool (303), by bringing the nozzle (203) into contact with the position adjustment tool (303) from a side thereof after a height position of the position adjustment tool (303) is determined,
- to calculate an adjustment value that is a difference between a design value of a predetermined distance between a predetermined position away from the position adjustment tool (303) and a position where the nozzle (203) is present when the nozzle (203) comes into contact with the position adjustment tool (303) and an actual measurement value related to the predetermined distance when the nozzle (203) is moved by the circumferential positioning mechanism (600), wherein the circumferential positioning mechanism (600) is configured to bring the nozzle (203) closer to the position adjustment tool (303) from one direction of the circumferential direction and to bring the nozzle (203) closer to the position adjustment tool (303) from the other direction of the circumferential direction,
- to calculate each of the adjustment values when the nozzle (203) is brought closer to the position adjustment tool (303) in each of the directions,
**characterized in that** the arithmetic control device (800) is further configured to determine a validity of a radial position of the nozzle (203)
- based on a position of the nozzle (203) after the nozzle (203) is moved by a distance obtained by adding or subtracting the adjustment value to or from the design value from each of the one direction and the other direction or
- by determining whether the adjustment values are in a predetermined range.

2. The automatic analyzer according to claim 1, wherein
the height positioning mechanism (500) is configured to determine the height position of the position adjustment tool (303) by detecting a contact position between an upper end surface of the position adjustment tool (303) and the nozzle (203), the contact position being detected by lowering the nozzle (203), and
the circumferential positioning mechanism (600) is configured to bring the nozzle (203) closer to the position adjustment tool (303) from the side of the position adjustment tool (303) in a state in which a lower end of the nozzle (203) is disposed below the upper end surface of the position adjustment tool (303).

3. The automatic analyzer according to claim 1 or 2, wherein
the nozzle (203) has a shape of which an outer diameter changes in the height direction, and
the arithmetic control device (800) is configured to position the accommodation portion (120) in the circumferential direction based on a contact position of the nozzle (203) with the position adjustment tool (303) in the height direction.

4. The automatic analyzer according to claim 3, wherein
the nozzle (203) includes a tip having a shape narrowing downward.

5. The automatic analyzer according to claim 1 or 2, further comprising:
an adjustment mechanism (302) configured to adjust at least one of a radial position of the nozzle and an angle of the nozzle (203) with respect to a rotation shaft (201) around which the nozzle (203) rotates.

6. The automatic analyzer according to claim 1 or 2, wherein
the accommodation portion (120) is provided in at least one of
an incubator (104) in which reaction containers (105) as the container accommodating a sample and a reagent as the fluid are continuously disposed in the circumferential direction, and
a holder configured to hold the container accommodating, as the fluid, at least one of the sample, the reagent, and a cleaning liquid for the nozzle (203).

7. The automatic analyzer according to claim 1 or 2, wherein
the rotation mechanism (400) includes a detection mechanism (305) configured to detect contact with the nozzle (203) based on a change in capacitance,
the nozzle is configured to aspirate and discharge, as the fluid, at least one of a sample, a reagent, and a cleaning liquid for the nozzle (203), and at least a lower end portion of the nozzle (203) is made of a resin, and
the arithmetic control device (800) sets a detection sensitivity of the detection mechanism (305) to the position adjustment tool (303) to be higher than a detection sensitivity at the time of aspiration of the fluid.

8. A position adjustment method comprising:
a nozzle height positioning step of performing at least one of aspiration of a fluid in a container (105) accommodated in an accommodation portion (120) disposed on a trajectory during rotation in an automatic analyzer and discharge of the fluid to the container (105), and positioning a position adjustment tool (303) accommodated in the accommodation portion (120) in a height direction by driving a nozzle that rotates in a horizontal plane; and
a nozzle circumferential positioning step of positioning the accommodation portion (120) accommodating the position adjustment tool (303) in a circumferential direction by bringing the nozzle (203) into contact with the position adjustment tool (303) from a side thereof after a height position of the position adjustment tool (303) is determined,
a step of determining the position in a height direction of a position adjustment tool (303) accommodated in the accommodation portion (120) by driving the nozzle (203), and
a step of determining the position in a circumferential direction of the accommodation portion (120) accommodating the position adjustment tool (303), by bringing the nozzle (203) into contact with the position adjustment tool (303) from a side thereof after a height position of the position adjustment tool (303) is determined,
a step of calculating an adjustment value that is a difference between a design value of a predetermined distance between a predetermined position away from the position adjustment tool (303) and a position where the nozzle (203) is present when the nozzle (203) comes into contact with the position adjustment tool (303) and an actual measurement value related to the predetermined distance when the nozzle (203) is moved by the circumferential positioning mechanism (600), wherein the circumferential positioning mechanism (600) is configured to bring the nozzle (203) closer to the position adjustment tool (303) from one direction of the circumferential direction and to bring the nozzle (203) closer to the position adjustment tool (303) from the other direction of the circumferential direction,
a step of calculating each of the adjustment values when the nozzle (203) is brought closer to the position adjustment tool (303) in each of the directions,
**characterized in that** position adjustment method further includes the step of determining a validity of a radial position of the nozzle (203)
- based on a position of the nozzle (203) after the nozzle (203) is moved by a distance obtained by adding or subtracting the adjustment value to or from the design value from each of the one direction and the other direction or
- by determining whether the adjustment values are in a predetermined range.

## Patentansprüche

1. Automatische Analysevorrichtung, umfassend:
einen Rotationsmechanismus (400), der dazu ausgebildet ist, eine Düse (203) in einer Umfangsrichtung in einer horizontalen Ebene zu drehen, die dazu ausgebildet ist, mindestens eines aus Ansaugen einer Flüssigkeit in einem Behälter, der auf einem auf einer Bahnkurve während der Drehung angeordneten Aufnahmeabschnitt (120) angeordnet ist, und Abgabe der Flüssigkeit an den Behälter durchzuführen;
einen Düsen-Höhenpositionierungsmechanismus (500), der dazu ausgebildet ist, ein auf dem Aufnahmeabschnitt (120) angeordnetes Positionseinstellungswerkzeug (303) durch Antreiben der Düse (203) in einer Höhenrichtung zu positionieren;
einen Düsen-Umfangspositionierungsmechanismus (600), der dazu ausgebildet ist, den das Positionseinstellungswerkzeug (303) anordnenden Aufnahmeabschnitt (120) in einer Umfangsrichtung zu positionieren, indem die Düse (203) mit dem Positionseinstellungswerkzeug (303) von einer Seite desselben in Kontakt gebracht wird, nachdem eine Höhenposition des Positionseinstellungswerkzeugs (303) bestimmt ist; und
eine arithmetische Steuerungsvorrichtung (800), die ausgebildet ist:
• zum Steuern des Rotationsmechanismus (400), des Höhenpositionierungsmechanismus (500) und des Umfangspositionierungsmechanismus (600),
• zum Bestimmen der Position in einer Höhenrichtung eines in dem Aufnahmeabschnitt (120) angeordneten Positionseinstellungswerkzeugs (303) durch Antreiben der Düse (203), und
• zum Bestimmen der Position in einer Umfangsrichtung des das Positionseinstellungswerkzeug (303) anordnenden Aufnahmeabschnitts (120) durch Inkontaktbringen der Düse (203) mit dem Positionseinstellungswerkzeug (303) von einer Seite desselben, nachdem eine Höhenposition des Positionseinstellungswerkzeugs (303) bestimmt ist,
• zum Berechnen eines Einstellungswerts, der eine Differenz zwischen einem Konstruktionswert einer vorgegebenen Entfernung zwischen einer vorgegebenen Position weg von dem Positionseinstellungswerkzeug (303) und einer Position, an der sich die Düse (203) befindet, wenn die Düse (203) mit dem Positionseinstellungswerkzeug (303) in Kontakt tritt, und einem tatsächlichen Messwert bezüglich der vorgegebenen Entfernung ist, wenn die Düse (203) von dem Umfangspositionierungsmechanismus (600) bewegt wird, wobei der Umfangspositionierungsmechanismus (600) dazu ausgebildet ist, die Düse (203) dem Positionseinstellungswerkzeug (303) aus einer Richtung der Umfangsrichtung näher zu bringen und die Düse (203) dem Positionseinstellungswerkzeug (303) aus der anderen Richtung der Umfangsrichtung näher zu bringen, um jeweils Einstellungswerte zu berechnen, wenn die Düse (203) dem Positionseinstellungswerkzeug (303) in der jeweiligen Richtung näher gebracht wird,
**dadurch gekennzeichnet, dass** die arithmetische Steuerungsvorrichtung (800) ferner dazu ausgebildet ist, eine Gültigkeit einer radialen Position der Düse (203) zu bestimmen
• basierend auf einer Position der Düse (203), nachdem die Düse (203) um eine Entfernung bewegt wurde, die durch Addieren oder Subtrahieren des Einstellungswerts zu oder von dem Konstruktionswert aus jeder der einen Richtung und der anderen Richtung erhalten wird, oder
• durch Bestimmen, ob der Einstellungswert innerhalb eines vorgegebenen Bereichs liegt.

2. Automatische Analysevorrichtung nach Anspruch 1, wobei
der Höhenpositionierungsmechanismus (500) dazu ausgebildet ist, die Höhenposition des Positionseinstellungswerkzeugs (303) durch Detektieren einer Kontaktposition zwischen einer oberen Endfläche des Positionseinstellungswerkzeugs (303) und der Düse (203) zu bestimmen, wobei die Kontaktposition durch Absenken der Düse (203) detektiert wird, und
der Umfangspositionierungsmechanismus (600) dazu ausgebildet ist, die Düse (203) dem Positionseinstellungswerkzeug (303) von der Seite des Positionseinstellungswerkzeugs (303) in einem Zustand näher zu bringen, in dem ein unteres Ende der Düse (203) unterhalb der oberen Endfläche des Positionseinstellungswerkzeugs (303) angeordnet ist.

3. Automatische Analysevorrichtung nach Anspruch 1 oder 2, wobei
die Düse (203) eine Form hat, deren Außendurchmesser sich in der Höhenrichtung ändert, und
die arithmetische Steuerungsvorrichtung (800) dazu ausgebildet ist, den Aufnahmeabschnitt (120) in der Umfangsrichtung basierend auf einer Kontaktposition der Düse (203) mit dem Positionseinstellungswerkzeug (303) in der Höhenrichtung zu positionieren.

4. Automatische Analysevorrichtung nach Anspruch 3, wobei
die Düse (203) eine Spitze mit einer sich nach unten verjüngenden Form umfasst.

5. Automatische Analysevorrichtung nach Anspruch 1 oder 2, ferner umfassend:
einen Einstellungsmechanismus (302), der dazu ausgebildet ist, mindestens eines aus einer radialen Position der Düse und einem Winkel der Düse (203) bezüglich einer Drehwelle (201), um die sich die Düse (203) dreht, einzustellen.

6. Automatische Analysevorrichtung nach Anspruch 1 oder 2, wobei
der Aufnahmeabschnitt (120) in mindestens einem aus
einem Inkubator (104), in dem Reaktionsbehälter (105) als der Behälter, der eine Probe und ein Reagenz als die Flüssigkeit anordnet, kontinuierlich in der Umfangsrichtung angeordnet sind, und
einem Halter, der dazu ausgebildet ist, den Behälter zu halten, der als die Flüssigkeit mindestens eines von der Probe, dem Reagenz und einer Reinigungsflüssigkeit für die Düse (203) anordnet, vorgesehen ist.

7. Automatische Analysevorrichtung nach Anspruch 1 oder 2, wobei
der Rotationsmechanismus (400) einen Detektionsmechanismus (305) umfasst, der dazu ausgebildet ist, Kontakt mit der Düse (203) basierend auf einer Kapazitätsänderung zu detektieren,
die Düse dazu ausgebildet ist, als die Flüssigkeit mindestens eines aus einer Probe, einem Reagenz und einer Reinigungsflüssigkeit für die Düse (203) anzusaugen und abzugeben, und mindestens ein unterer Endabschnitt der Düse (203) aus einem Harz besteht, und
die arithmetische Steuerungsvorrichtung (800) eine Detektionsempfindlichkeit des Detektionsmechanismus (305) gegenüber dem Positionseinstellungswerkzeug (303) höher einstellt als eine Detektionsempfindlichkeit zum Zeitpunkt des Ansaugens der Flüssigkeit.

8. Positionseinstellungsverfahren, umfassend:
einen Düsen-Höhenpositionierungsschritt des Durchführens mindestens eines von Ansaugen einer Flüssigkeit in einem Behälter (105), der in einem auf einer Bahn während der Drehung in einer automatischen Analysevorrichtung angeordneten Aufnahmeabschnitt (120) angeordnet ist, und Abgabe der Flüssigkeit an den Behälter (105), und Positionieren eines in dem Aufnahmeabschnitt (120) angeordneten Positionseinstellungswerkzeugs (303) in einer Höhenrichtung durch Antreiben einer Düse, die sich in einer horizontalen Ebene dreht; und
einen Düsen-Umfangspositionierungsschritt des Positionierens des das Positionseinstellungswerkzeug (303) anordnende Aufnahmeabschnitts (120) in einer Umfangsrichtung durch Inkontaktbringen der Düse (203) mit dem Positionseinstellungswerkzeug (303) von einer Seite davon, nachdem eine Höhenposition des Positionseinstellungswerkzeugs (303) bestimmt ist,
einen Schritt des Bestimmens der Position in einer Höhenrichtung eines in dem Aufnahmeabschnitt (120) angeordneten Positionseinstellungswerkzeugs (303) durch Antreiben der Düse (203), und einen Schritt des Bestimmens der Position in einer Umfangsrichtung des das Positionseinstellungswerkzeug (303) anordnenden Aufnahmeabschnitts (120) durch Inkontaktbringen der Düse (203) mit dem Positionseinstellungswerkzeug (303) von einer Seite desselben, nachdem eine Höhenposition des Positionseinstellungswerkzeugs (303) bestimmt ist,
einen Schritt des Berechnens eines Einstellungswerts, der eine Differenz zwischen einem Konstruktionswert einer vorgegebenen Entfernung zwischen einer vorgegebenen Position weg von dem Positionseinstellungswerkzeug (303) und einer Position, an der sich die Düse (203) befindet, wenn die Düse (203) mit dem Positionseinstellungswerkzeug (303) in Kontakt tritt, und einem tatsächlichen Messwert bezüglich der vorgegebenen Entfernung ist, wenn die Düse (203) von dem Umfangspositionierungsmechanismus (600) bewegt wird, wobei der Umfangspositionierungsmechanismus (600) dazu ausgebildet ist, die Düse (203) dem Positionseinstellungswerkzeug (303) aus einer Richtung der Umfangsrichtung näher zu bringen und die Düse (203) dem Positionseinstellungswerkzeug (303) aus der anderen Richtung der Umfangsrichtung näher zu bringen, einen Schritt des Berechnens jedes der Einstellungswerte, wenn die Düse (203) dem Positionseinstellungswerkzeug (303) in jeder der Richtungen näher gebracht wird,
**dadurch gekennzeichnet, dass** das Positionseinstellungsverfahren ferner den Schritt des Bestimmens einer Gültigkeit einer radialen Position der Düse (203) umfasst
• basierend auf einer Position der Düse (203), nachdem die Düse (203) um eine Entfernung bewegt wurde, die durch Addieren oder Subtrahieren des Einstellungswerts zu oder von dem Konstruktionswert aus jeder der einen Richtung und der anderen Richtung erhalten wird, oder
• durch Bestimmen, ob der Einstellungswert in einem vorgegebenen Bereich liegt.

## Revendications

1. Analyseur automatique comprenant :
un mécanisme (400) de rotation configuré pour faire tourner, dans un sens circonférentiel dans un plan horizontal, une buse (203) configurée pour exécuter au moins une parmi une aspiration d'un fluide dans un récipient reçu dans une partie (120) de réception disposée sur une trajectoire lors de la rotation et une décharge du fluide jusqu'au récipient ;
un mécanisme (500) de positionnement en hauteur de buse configuré pour positionner un outil (303) d'ajustement de position reçu dans la partie (120) de réception dans un sens de la hauteur en entraînant la buse (203) ;
un mécanisme (600) de positionnement circonférentiel de buse configuré pour positionner la partie (120) de réception recevant l'outil (303) d'ajustement de position dans un sens circonférentiel en amenant la buse (203) en contact avec l'outil (303) d'ajustement de position depuis un côté de celui-ci après qu'une position en hauteur de l'outil (303) d'ajustement de position a été déterminé ; et
un dispositif (800) de commande arithmétique configuré
- pour commander le mécanisme (400) de rotation, le mécanisme (500) de positionnement en hauteur, et le mécanisme (600) de positionnement circonférentiel,
- pour déterminer la position dans un sens de la hauteur d'un outil (303) d'ajustement de position reçu dans la partie (120) de réception en entraînant la buse (203), et
- pour déterminer la position dans un sens circonférentiel de la partie (120) de réception recevant l'outil (303) d'ajustement de position, en amenant la buse (203) en contact avec l'outil (303) d'ajustement de position depuis un côté de celui-ci après qu'une position en hauteur de l'outil (303) d'ajustement de position a été déterminé,
- pour calculer une valeur d'ajustement qui est une différence entre une valeur de conception d'une distance prédéterminée entre une position prédéterminée à l'écart de l'outil (303) d'ajustement de position et une position où la buse (203) est présente lorsque la buse (203) vient en contact avec l'outil (303) d'ajustement de position et une valeur de mesure réelle se rapportant à la distance prédéterminée lorsque la buse (203) est déplacée par le mécanisme (600) de positionnement circonférentiel, dans lequel le mécanisme (600) de positionnement circonférentiel est configuré pour amener la buse (203) plus près de l'outil (303) d'ajustement de position depuis un sens du sens circonférentiel et pour amener la buse (203) plus près de l'outil (303) d'ajustement de position depuis l'autre sens du sens circonférentiel,
- pour calculer chacune des valeurs d'ajustement lorsque la buse (203) est amenée plus près de l'outil (303) d'ajustement de position dans chacun des sens,
**caractérisé en ce que** le dispositif (800) de commande arithmétique est en outre configuré pour déterminer une validité d'une position radiale de la buse (203)
- sur la base d'une position de la buse (203) après que la buse (203) a été déplacée d'une distance obtenue en ajoutant ou en soustrayant la valeur d'ajustement à ou de la valeur de conception depuis chacun du sens et de l'autre sens ou
- en déterminant si les valeurs d'ajustement sont dans une plage prédéterminée.

2. Analyseur automatique selon la revendication 1, dans lequel
le mécanisme (500) de positionnement en hauteur est configuré pour déterminer la position en hauteur de l'outil (303) d'ajustement de position en détectant une position de contact entre une surface d'extrémité supérieure de l'outil (303) d'ajustement de position et la buse (203), la position de contact étant détectée en abaissant la buse (203), et
le mécanisme (600) de positionnement circonférentiel est configuré pour amener la buse (203) plus près de l'outil (303) d'ajustement de position depuis le côté de l'outil (303) d'ajustement de position dans un état dans lequel une extrémité inférieure de la buse (203) est disposée en-dessous de la surface d'extrémité supérieure de l'outil (303) d'ajustement de position.

3. Analyseur automatique selon la revendication 1 ou 2, dans lequel
la buse (203) a une forme dont un diamètre extérieur change dans le sens de la hauteur, et
le dispositif (800) de commande arithmétique est configuré pour positionner la partie (120) de réception dans le sens circonférentiel sur la base d'une position de contact de la buse (203) avec l'outil (303) d'ajustement de position dans le sens de la hauteur.

4. Analyseur automatique selon la revendication 3, dans lequel
la buse (203) inclut un embout ayant une forme s'étrécissant vers le bas.

5. Analyseur automatique selon la revendication 1 ou 2, comprenant en outre :
un mécanisme (302) d'ajustement configuré pour ajuster au moins un(e) parmi une position radiale de la buse et un angle de la buse (203) par rapport à un arbre de rotation (201) autour duquel la buse (203) tourne.

6. Analyseur automatique selon la revendication 1 ou 2, dans lequel
la partie (120) de réception est prévue dans au moins un parmi
un incubateur (104) dans lequel des récipients (105) de réaction comme le récipient recevant un échantillon et un réactif comme le fluide sont disposés de façon continue dans le sens circonférentiel, et
un support configuré pour supporter le récipient recevant, comme le fluide, au moins un parmi l'échantillon, le réactif, et un liquide de nettoyage pour la buse (203).

7. Analyseur automatique selon la revendication 1 ou 2, dans lequel
le mécanisme (400) de rotation inclut un mécanisme (305) de détection configuré pour détecter un contact avec la buse (203) sur la base d'un changement de capacitance,
la buse est configurée pour aspirer et décharger, comme le fluide, au moins un parmi un échantillon, un réactif et un liquide de nettoyage pour la buse (203), et au moins une partie d'extrémité inférieure de la buse (203) est constituée d'une résine, et
le dispositif (800) de commande arithmétique définit une sensibilité de détection du mécanisme (305) de détection pour l'outil (303) d'ajustement de position pour qu'elle soit supérieure à une sensibilité de détection au moment de l'aspiration du fluide.

8. Procédé d'ajustement de position comprenant :
une étape de positionnement en hauteur de buse pour exécuter au moins une parmi une aspiration d'un fluide dans un récipient (105) reçu dans une partie (120) de réception disposée sur une trajectoire lors de la rotation dans un analyseur automatique et une décharge du fluide jusqu'au récipient (105), et le positionnement d'un outil (303) d'ajustement de position reçu dans la partie (120) de réception dans un sens de la hauteur en entraînant une buse qui tourne dans un plan horizontal ; et
une étape de positionnement circonférentiel de buse pour positionner la partie (120) de réception recevant l'outil (303) d'ajustement de position dans un sens circonférentiel en amenant la buse (203) en contact avec l'outil (303) d'ajustement de position depuis un côté de celui-ci après qu'une position en hauteur de l'outil (303) d'ajustement de position a été déterminé,
une étape de détermination de la position dans un sens de la hauteur d'un outil (303) d'ajustement de position reçu dans la partie (120) de réception en entraînant la buse (203), et
une étape de détermination de la position dans un sens circonférentiel de la partie (120) de réception recevant l'outil (303) d'ajustement de position, en amenant la buse (203) en contact avec l'outil (303) d'ajustement de position depuis un côté de celui-ci après qu'une position en hauteur de l'outil (303) d'ajustement de position a été déterminé,
une étape de calcul d'une valeur d'ajustement qui est une différence entre une valeur de conception d'une distance prédéterminée entre une position prédéterminée à l'écart de l'outil (303) d'ajustement de position et une position où la buse (203) est présente lorsque la buse (203) vient en contact avec l'outil (303) d'ajustement de position et une valeur de mesure réelle se rapportant à la distance prédéterminée lorsque la buse (203) est déplacée par le mécanisme (600) de positionnement circonférentiel, dans lequel le mécanisme (600) de positionnement circonférentiel est configuré pour amener la buse (203) plus près de l'outil (303) d'ajustement de position depuis un sens du sens circonférentiel et pour amener la buse (203) plus près de l'outil (303) d'ajustement de position depuis l'autre sens du sens circonférentiel,
une étape de calcul de chacune des valeurs d'ajustement lorsque la buse (203) est amenée plus près de l'outil (303) d'ajustement de position dans chacun des sens,
**caractérisé en ce que** le procédé d'ajustement de position inclut en outre l'étape de détermination d'une validité d'une position radiale de la buse (203)
- sur la base d'une position de la buse (203) après que la buse (203) a été déplacée d'une distance obtenue en ajoutant ou en soustrayant la valeur d'ajustement à ou de la valeur de conception depuis chacun du sens et de l'autre sens ou
- en déterminant si les valeurs d'ajustement sont dans une plage prédéterminée.
